(19) Europäisches Patentamt
European Patent Office
Office européen des brevets

(11) **EP 2 597 048 B1**

(12) **FASCICULE DE BREVET EUROPEEN**

(45) Date de publication et mention
de la délivrance du brevet:
**07.08.2019 Bulletin 2019/32**

(51) Int Cl.:
*B65D 39/00* [(2006.01)]     *G01M 3/02* [(2006.01)]
*G01M 3/28* [(2006.01)]     *G01N 15/08* [(2006.01)]

(21) Numéro de dépôt: **12193825.2**

(22) Date de dépôt: **22.11.2012**

(54) **Cellule pour la mesure de la perméabilité de bouchons**

Zelle zum Messen der Durchlässigkeit von Korken

Cell for measuring cork permeability

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.11.2011 FR 1160701**

(43) Date de publication de la demande:
**29.05.2013 Bulletin 2013/22**

(73) Titulaire: **DIAM BOUCHAGE**
**66400 Ceret (FR)**

(72) Inventeurs:
• **Rabiot, Dominique**
**66300 SAINT JEAN LASSEILLE (FR)**
• **Bosch, Philippe**
**66100 Amélie les Bains Palalda (FR)**

(74) Mandataire: **Casalonga**
**Casalonga & Partners**
**Bayerstraße 71/73**
**80335 München (DE)**

(56) Documents cités:
**EP-A1- 2 365 309     FR-A1- 2 844 596**
**US-A- 5 668 307     US-A- 5 817 924**

• **DAVID P FARIA ET AL: "permeability of cork to gases", PERMEABILITY OF CORK TO GASES,, vol. 59, 24 mars 2011 (2011-03-24), pages 3590-3597, XP002677208,**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention a pour objet un dispositif pour mesurer la perméabilité à certains gaz d'un bouchon, notamment d'un bouchon épais ou d'un joint de bouteille ou un bocal. Dans le cas de bouteilles, flacons ou bouchons ou de bocaux destinés à contenir des aliments ou des boissons, on peut par exemple s'intéresser à la perméabilité du bouchon à l'oxygène, qui en entrant dans la bouteille ou dans le bocal peut oxyder l'aliment ou la boisson qui y est contenu.

On peut également s'intéresser à la perméabilité du bouchon, à des gaz dégagés par l'aliment ou la boisson contenu dans la bouteille ou le bocal, par exemple à la perméabilité du bouchon au dioxyde de carbone présent dans les boissons effervescentes telles que le champagne.

Plus particulièrement, l'invention a pour objet une cellule d'essai permettant d'appliquer de part et d'autre d'un bouchon, des conditions de vide et/ou de pression de certains gaz, nécessaires pour la mesure de la perméabilité.

Des méthodes de mesure de la perméabilité d'un gaz au travers de membranes de matériaux divers sont par exemple décrites dans les normes ASTM D 1434-82, ASTM F 2622-08, ASTM F 1927-07, ASTM F 1307-02 ou dans la norme NF EN Iso 2556 de février 2001.

Ces méthodes, et les dispositifs associés ne sont cependant pas adaptés pour mesurer la perméabilité de bouchons épais tels que les bouchons en liège ou les bouchons en matière synthétique remplaçant les bouchons en liège, dont l'épaisseur est sensiblement plus importante que le diamètre, et qui ne peuvent donc être assimilés à des membranes.

Du fait de l'épaisseur de matière à traverser, les quantités de gaz que l'on peut collecter en aval d'un bouchon sont plus faibles que dans les dispositifs de mesure traditionnellement utilisés pour des membranes. En outre, afin que la mesure soit représentative des conditions de fonctionnement réelles du bouchon, on souhaite utiliser comme pression de gaz appliquée au bouchon une pression proche de celle existant dans les conditions réelles, par exemple une pression de l'ordre de l'atmosphère pour mesurer la perméabilité à l'oxygène.

L'invention a pour but un dispositif permettant d'obtenir des mesures fiables et reproductibles de la perméabilité d'un bouchon en limitant le nombre de manipulations à effectuer par l'opérateur, et permettant d'obtenir un résultat de mesure au bout d'un temps d'essai relativement court, c'est-à-dire de l'ordre du jour ou de la semaine. L'invention a en particulier pour but de proposer une cellule d'essai qui peut être fabriquée de manière reproductible, permet une mise en place aisée de l'échantillon à mesurer, et permet une collecte et une quantification fiable des gaz ayant traversé l'échantillon.

Parmi les installations proposées pour mesurer la perméabilité de bouchons à l'oxygène, on trouve par exemple des bancs sur lesquels on installe des cols de bouteilles modifiés, munis de bouchons, les bouchons étant par l'extérieur du col de la bouteille, à l'atmosphère ambiante et étant soumis sur leur face "interne à la bouteille" à un flux de gaz neutres. Des détecteurs d'oxygène, par exemple basés sur les méthodes coulométriques, permettent de mesurer le flux d'oxygène traversant le bouchon, une fois un régime de diffusion établi au travers du bouchon. Ces détecteurs comptabilisent des échanges électroniques entre les molécules d'oxygène et un détecteur électrochimique, qu'il faut changer périodiquement quand il ne dispose plus d'une quantité suffisante de sites réactifs. Ces détecteurs sont onéreux et fragiles (l'élément de détection ne doit pas venir en contact avec l'air, sous peine de se saturer irréversiblement). De ce fait on ne branche le col de bouteille factice au détecteur qu'au moment de la mesure, le col factice étant placé le reste du temps sur un banc d'alimentation en gaz neutres sans détecteur. En outre, les cols de bouteille modifiés sont obtenus à partir d'une découpe artisanale laborieuse de bouteilles en verre, et l'étanchéité d'un tel col "instrumenté" n'est pas toujours optimale.

Au coût élevé de l'appareillage s'ajoute donc le coût de la main d'oeuvre nécessaire pour brancher et débrancher successivement les cols factices et effectuer des mesures.

Un autre but de l'invention est de proposer un dispositif de mesure de perméabilité utilisant des capteurs largement disponibles sur le marché, ce qui permet de laisser le capteur installé sur chaque cellule de mesure pendant toute la durée de l'essai. On limite ainsi les coûts de manutention et les artefacts expérimentaux liés au montage ou au démontage d'une cellule en vue de la brancher sur le détecteur.

De cette manière, on minimise le volume intérieur à la cellule et se trouvant en aval du bouchon, ce volume comprenant le volume du conduit de collecte, auquel s'ajoute un volume de jeu résiduel entre l'aval du bouchon et la plaque de collecte.

Le conduit du porte échantillon présente une surface d'appui intérieure qui est une surface de révolution, comportant une section de plus petit diamètre. Le diamètre de cette section est strictement inférieur au diamètre des autres sections de la surface d'appui. La surface d'appui intérieure comporte au moins une première portion de surface tronconique convergeant vers cette section de plus petit diamètre, ainsi qu'une seconde portion de surface d'appui divergeant du côté opposé à partir de la section de plus petit diamètre.

De cette manière, le porte échantillon comporte un logement sensiblement cylindrique apte à recevoir un échantillon de matière inséré dans le logement, en appui circonférentiel sur la surface d'appui intérieure. Le logement présente une striction locale favorisant le maintien en place de l'échantillon, et n'abîmant pas l'échantillon lors de sa mise en place. De manière préférentielle, la longueur du logement est au moins égale au diamètre du logement. Suivant les longueurs des conduits d'alimentation et de collecte de la plaque de distribution et de collecte, ces conduits peuvent éventuellement être assimilés à des orifices si leur longueur se limite à l'épaisseur de la plaque.

A cette fin, il est proposé une cellule d'essais pour la mesure de la perméabilité aux gaz d'au moins un échantillon de matière ou d'un bouchon, comprenant :

- une cloche de conditionnement sensiblement cylindrique comportant une paroi circonférentielle étanche, un premier orifice d'entrée et un premier orifice de sortie,
- une plaque de distribution étanche aux gaz, apte à être assemblée avec la cloche de conditionnement de manière étanche, et comportant au moins un conduit d'alimentation traversant la plaque de manière à déboucher dans le premier orifice d'entrée,
- un porte échantillon monobloc traversé par un conduit sensiblement cylindrique reliant un second orifice d'entrée et un second orifice de sortie, le porte échantillon étant une pièce séparée apte à être assemblée avec la cloche de manière à former un volume étanche aux gaz reliant le premier orifice d'entrée et le second orifice de sortie,
- une plaque de collecte étanche aux gaz, apte à être assemblée avec le porte échantillon de manière étanche, et comportant au moins un conduit de collecte traversant la plaque de manière à déboucher dans le second orifice de sortie,

caractérisé en ce que la plaque de distribution comporte au moins un creux de centrage dans lequel vient s'insérer axialement une première extrémité axiale de la cloche de manière à ce que la plaque de distribution recouvre le premier orifice d'entrée, et ce que la plaque de collecte comporte au moins un creux de centrage, dans lequel vient s'insérer axialement une extrémité axiale du porte échantillon de manière à ce que la plaque de collecte recouvre le second orifice de sortie, ces creux de centrage étant aptes respectivement à maintenir radialement la cloche par rapport à la plaque de distribution et à maintenir le porte échantillon par rapport à la plaque de collecte,

et en ce que l'extrémité du conduit de collecte faisant face au second orifice de sortie est de diamètre strictement inférieur au diamètre intérieur du creux de centrage de la plaque de collecte destiné à recevoir le porte échantillon, et le conduit de collecte et l'extrémité du conduit cylindrique du porte échantillon étant reliés par une portion de surface sensiblement plane ou conique de la plaque de collecte.

De manière préférentielle, la portion tronconique est de longueur supérieure ou égale à 10mm, et de préférence supérieure ou égale à 20mm, et présente une inclinaison par rapport à son axe comprise entre 0.7° et 3°.

Selon un mode de réalisation avantageux, le porte échantillon est une pièce métallique, la rugosité parallèlement à l'axe du conduit du porte échantillon, de la surface intérieure d'appui, présentant un Ra$\leq$0,7$\mu$m et un Rp $\leq$1,5$\mu$m et de préférence un Ra $\leq$0,5$\mu$m et un Rp $\leq$1,3$\mu$m. Ces valeurs maximales de rugosité permettent une mise en place de l'échantillon à l'aide de moyens de bouchage traditionnels, sans augmenter outre mesure la force nécessaire pour insérer le bouchon, et permettent d'obtenir une étanchéité satisfaisante à l'interface entre l'échantillon et la surface d'appui.

Dans un mode de réalisation, la cellule comporte une cloche et un porte échantillon, aptes à être reliés par une zone annulaire d'étanchéité pour former le volume étanche aux gaz de manière à ce qu'une portion du porte échantillon entourant le second orifice d'entrée, dépasse à l'intérieur de la cloche par une portion de surface libre entourant une portion du conduit intérieur du porte échantillon. Par portion de surface libre, on entend ici une portion de surface qui n'est en contact ni avec la cloche, ni avec le système d'étanchéité de la zone annulaire.

Avantageusement, le porte échantillon comporte au moins un bourrelet circonférentiel ou un filetage au niveau de la surface libre.

Selon un mode de réalisation préféré, la plaque de distribution et la plaque de collecte comportent chacune au moins un creux de centrage, apte respectivement à maintenir radialement la cloche par rapport à la plaque de distribution et à maintenir la cloche et/ou le support par rapport à la plaque de collecte.

De manière préférentielle, les deux creux de centrage sont de même diamètre. Il est ainsi possible de retourner le volume étanche par rapport aux plaques de distribution et de collecte, pour tester l'étanchéité "vers l'extérieur" du bouchon ou de la capsule monté(e) sur le porte échantillon, par exemple pour tester la perméabilité au $CO_2$ d'un bouchon à capsule et muselet.

Selon un mode de réalisation qui peut se combiner au précédent, le conduit de collecte débouche au centre du creux de centrage de la plaque de collecte, et l'extrémité du conduit de collecte ainsi que l'extrémité du conduit cylindrique sont reliés par une portion de surface sensiblement conique de la plaque de collecte.

Avantageusement, le conduit de collecte débouche au centre du creux de centrage de la plaque de collecte, et la plaque de collecte est munie à sa surface de canaux ménagés à l'intérieur du creux de centrage, et convergeant radialement vers le conduit de collecte.

Selon un mode de réalisation préféré, le porte échantillon présente un profil extérieur reproduisant la géométrie d'une extrémité de col de bouteille apte à recevoir un bouchon à plaque et muselet, une capsule à vis, ou une capsule couronne, et la cloche est apte à contenir le porte échantillon muni du bouchon ou de la capsule. Avantageusement, si le profil extérieur du porte échantillon reproduit un col pour bouchon à capsule et muselet, le profil intérieur du porte échantillon reproduit également le profil intérieur d'un col de bouteille apte à accueillir un bouchon de ce type.

Dans un mode de réalisation avantageux, plusieurs cloches sont aptes à être assemblées simultanément entre une même plaque de distribution et une même plaque de collecte. La plaque de distribution peut alors comporter plusieurs conduits d'alimentation disposés en étoile et reliant chacun des orifices d'entrée de chaque cloche, et un même orifice d'alimentation, apte à être connecté à un conduit extérieur à la cellule.

La plaque de collecte peut aussi comporter plusieurs conduits de collecte disposés en étoile et reliant chacun des orifices de sortie du porte échantillon associé à chaque cloche, et un même orifice de collecte, apte à être connecté à un conduit extérieur à la cellule.

De manière préférentielle, le réseau de conduits de la plaque de collecte comprend un second orifice de collecte également apte à être connecté à un capteur ou à un conduit extérieur à la cellule.

Dans un mode de réalisation préféré, le volume total des conduits de la plaque de distribution est supérieur au volume total des conduits de la plaque de collecte.

Il est également proposé un ensemble d'essai comprenant une cellule telle que décrite précédemment, et comprenant un support de bouchage formant un tronc vertical apte à recevoir un porte échantillon de la cellule, sur un relief de diamètre similaire à un creux de centrage de la plaque de collecte ménagé en partie supérieure du tronc. Le support de bouchage peut par exemple être un cylindre de même diamètre qu'une bouteille usuellement associée au profil de col reproduit par le porte échantillon, et de hauteur complémentaire à celle du porte échantillon pour que l'ensemble support + porte échantillon ait une hauteur compatible avec des moyens de bouchage prévus pour la bouteille.

Par bouchon on entend dans le texte, sauf précision contraire, un élément de fermeture et d'étanchéité de type bouchon ou capsule, apte à assurer la fermeture du goulot d'une bouteille ou d'un bocal soit par insertion dans le goulot, soit par sertissage, vissage ou autre mode d'assemblage avec la partie supérieure du goulot.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 est une vue schématique d'un banc de mesure de perméabilité selon l'invention ;
- la figure 2 est un élément d'une cellule de mesure d'un dispositif selon l'invention ;
- la figure 3 est un autre élément d'une cellule de mesure d'un dispositif selon l'invention ;
- la figure 4 est une vue simplifiée en coupe d'une cellule d'un dispositif selon l'invention ;
- la figure 5 est une vue éclatée schématique d'une autre variante de cellule d'un dispositif selon l'invention ;
- la figure 6 est une vue de face d'une des pièces composant la cellule de la figure 5 ;
- la figure 7 est une vue schématique en coupe d'une troisième cellule d'un dispositif selon l'invention.
- la figure 8 est une vue schématique en coupe d'une quatrième cellule d'un dispositif selon l'invention.

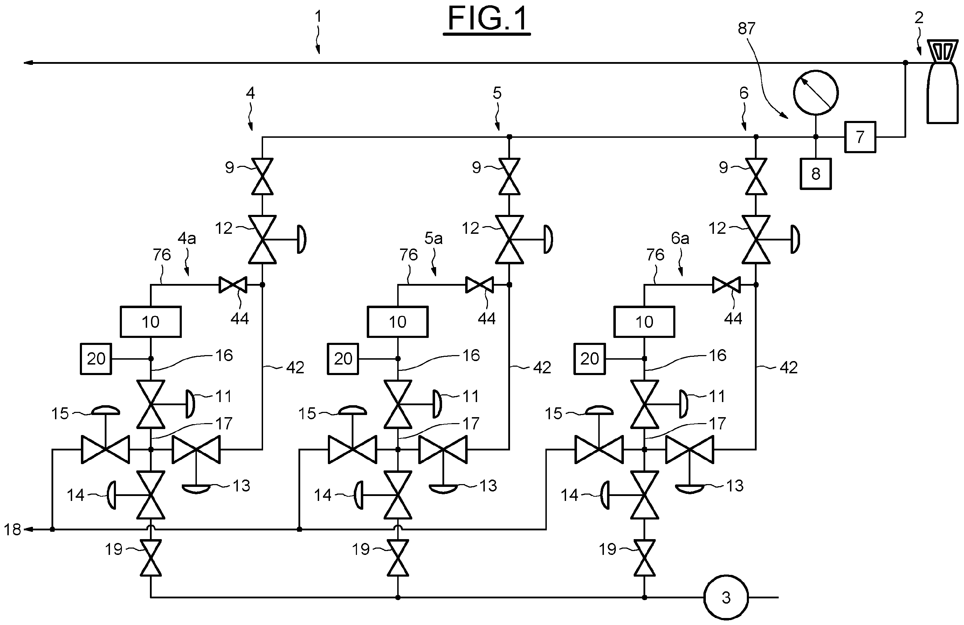

Tel qu'illustré sur la figure 1, un banc de mesure de perméabilité référencé 1 comprend une alimentation en gaz 2, une pompe à vide 3, et une ou plusieurs unités de mesure référencées ici 4, 5, 6, disposées entre l'alimentation en gaz 2 et la pompe à vide 3. Sur la figure 1, trois unités de mesure ont été représentées. Selon les variantes de réalisation, on peut construire des bancs de mesure ne comportant qu'une seule unité de mesure ou comportant plus de trois unités de mesure, par exemple cinq, sept, dix unités de mesure.

Les différentes unités de mesure 4, 5, 6, sont branchées en parallèle entre l'alimentation en gaz 2 et la pompe à vide 3. Une unité de régulation de pression 87 comprenant un capteur de pression amont 7 et un régulateur de pression amont 8, est en outre disposée entre l'alimentation en gaz 2 et les unités de mesure 4, 5, 6. Le régulateur de pression 8 peut comprendre un détendeur (non représenté) permettant d'évacuer un excédent de pression -par rapport à une consigne de pression- qui se produirait en amont de l'unité de régulation 87. Chaque unité de mesure 4, 5, 6 comprend respectivement une conduite de gaz respectivement 4a, 5a, 6a, reliant l'alimentation en gaz 2 et la pompe à vide 3. Sur le trajet de cette conduite de gaz, est interposée une cellule de mesure 10 permettant d'interposer, sur le trajet du gaz circulant de l'alimentation 2 vers la pompe à vide 3, un ou plusieurs bouchons dont on souhaite évaluer la perméabilité.

Nous appellerons dans la suite de la description « position amont » les positions rapprochées de l'alimentation en gaz et « position aval » les positions rapprochées de la pompe à vide 3.

Dans la suite nous décrivons l'architecture d'une unité de mesure en particulier, par exemple l'unité de mesure 6.

Chaque unité de mesure 4, 5, 6 comprend une vanne d'isolement amont 9 permettant de l'isoler de l'alimentation en gaz 2, et comprend une vanne d'isolement aval 19 permettant de l'isoler de la pompe à vide 3. Ces deux vannes d'isolement permettent par exemple de désactiver l'unité de mesure associée et de continuer de travailler sur les autres unités de mesure.

En aval de la vanne 9 est disposée une vanne pilotée 12 d'alimentation qui permet, de même que la vanne 9, d'isoler l'unité de mesure de l'alimentation en gaz 2. Selon une variante de réalisation, l'ouverture et la fermeture progressives de la vanne 12 peuvent être régulées plus finement que celle de la vanne 9, qui est une vanne tout ou rien. Selon une autre variante de réalisation, la vanne 12 peut être une vanne on/off. La vanne 12 d'alimentation est reliée à une unité de commande électronique (UCE) (non représentée), apte à piloter la vanne 12 en fonction des besoins d'alimentation en gaz de la cellule 10 au cours d'un cycle de mesure de perméabilité.

La vanne 19 est également secondée par une vanne pilotée 14 de mise au vide, placée en amont de la vanne 19 et qui, quand la vanne 19 est ouverte, peut assurer la même fonction d'isolement vis-à-vis de la pompe à vide 3 que la vanne 19. La vanne 14 de mise au vide est reliée à l'unité de commande électronique (UCE) (non représentée), apte à piloter la vanne 14 en fonction des besoins en vide de la cellule 10 au cours d'un cycle de mesure de perméabilité.

Le capteur de pression amont 7 et le régulateur de pression amont 8 sont également reliés à l'unité de commande électronique.

La cellule de mesure 10 est disposée entre la vanne d'alimentation 12 et la vanne de mise au vide 14. Une vanne de contention aval 11, également pilotée par l'UCE, est disposée en aval de la cellule de mesure 10, entre la cellule de mesure 10 et la vanne de mise au vide 14.

La cellule 10 contient un ou plusieurs bouchons à évaluer, disposés de manière à ce que tous les gaz traversant la cellule soient contraints de traverser l'un ou l'autre des bouchons. La vanne de contention aval 11 est disposée à proximité de la cellule 10, de préférence le plus près possible eu égard aux contraintes d'assemblage des différentes connexions de la conduite gazeuse (connexion de l'aval de la cellule 10 avec la vanne 11 par exemple, connexion d'un capteur de pression à la cellule ou à l'amont de la vanne 11, voir suite de la description...).

Une chambre aval 16 est définie par le volume compris, à l'intérieur de la conduite 4a, 5a, ou 6a et de la cellule 10, entre la face aval du ou des bouchons, et la vanne de contention aval 11. Un capteur de pression 20 est connecté à la chambre aval 16.

Lorsque la vanne de contention aval 11 est fermée, les gaz traversant le ou les bouchons disposés dans la cellule 10 peuvent s'accumuler dans la chambre aval 16.

Dans la suite de la description, on désigne par volume minimal de la chambre aval, le volume minimal disponible dans la chambre aval quand un bouchon, ou quand chaque bouchon d'un groupe de bouchons, est inséré dans la cellule jusqu'à une position de butée dans laquelle le volume de la chambre aval est le plus faible, par rapport à d'autres positions où tous les bouchons ne seraient pas en position de butée. Par volume réel de la chambre aval, on désigne le volume de la chambre aval une fois qu'un bouchon quelconque est placé dans la cellule, ou qu'un groupe de bouchons quelconques sont placés dans la cellule, en comptabilisant le volume supplémentaire de la chambre aval dû au fait que tous les bouchons ne sont pas en position de butée.

Une seconde prise d'air 18 est branchée entre chaque couple de vannes pilotées 11 de contention aval et 14 de mise au vide, d'une même unité de mesure. Cette prise d'air 18 peut être isolée par une vanne pilotée 15, séparant l'atmosphère extérieure de la portion de conduite comprise entre la vanne pilotée 11 et la vanne pilotée 14. On prévoit de préférence une vanne pilotée 15 pour chaque unité de mesure 4, 5, 6.

Une conduite de by-pass 42 relie une première portion de conduite disposée entre l'amont de la cellule 10 et l'aval de la vanne d'alimentation 12, et une seconde portion de conduite reliant la vanne de contention aval 11 et la vanne de mise au vide 14. Une vanne de by-pass 13 est disposée sur la conduite de by-pass 42. Quand la vanne de contention aval 11 et la vanne de by-pass 13 sont ouvertes, l'amont et l'aval de la cellule 10 sont reliés au travers de la conduite de by-pass 42, les échanges de gaz entre l'amont et l'aval de la cellule 10 étant alors possibles sans traverser les bouchons contenus dans la cellule. Quand la vanne de by-pass 13 est fermée, tous les gaz traversant la cellule 10 sont contraints de traverser l'un des bouchons disposés dans la cellule.

Une chambre amont 76 est ainsi définie par le volume compris, à l'intérieur de la conduite 4a, 5a, ou 6a et de la cellule 10 associée, entre la face amont du bouchon ou des bouchons, la vanne d'alimentation 12, et la vanne de by-pass 13.

Lorsque la vanne d'alimentation 12 ainsi que la vanne de mise à l'air 15 de l'unité de mesure sont fermées, les vannes 11, 14, 19 de l'unité étant ouvertes, la pompe à vide 3 peut faire le vide dans la chambre aval 16 en aspirant le gaz contenu dans cette chambre au travers de la vanne d'isolement aval 11 puis de la vanne de régulation 14 et enfin de la vanne d'isolement aval 19. Si la vanne 13 est ouverte, la pompe 3 permet de faire simultanément le vide dans la chambre amont 76. Si la vanne 13 est fermée, le vide est effectué dans la chambre aval 16 indépendamment de la pression régnant en amont de la vanne 13, notamment de la pression dans la chambre amont 76.

Lorsque les vannes 11 et 13 de l'unité de mesure sont fermées, les vannes 9 et 12 étant ouvertes, du gaz provenant de l'alimentation en gaz 2 peut entrer dans l'unité de mesure par la vanne d'isolement amont 9, traverser la vanne d'alimentation 12, arriver dans la cellule de mesure 10, traverser le ou les bouchons interposés sur son passage, et ressortir dans la chambre aval 16 munie du capteur de pression 20. Si le vide a auparavant été effectué dans la chambre aval 16, tout le gaz présent dans la chambre aval 16 y sera parvenu en traversant le ou les bouchons de la cellule 10.

Le gaz arrivant au travers des bouchons de la cellule de mesure 10 provoque alors une augmentation de pression dans la chambre aval 16, qui peut être mesurée par le capteur 20, à condition que la pression de la chambre aval 16 se trouve dans la gamme de mesure du capteur.

Les portions de conduites comprises entre les quatre vannes 11, 13, 14 et 15, qui peuvent par exemple être constituées par un raccord en croix, délimitent un volume de dosage 17, qui peut être relié ou isolé d'avec la chambre aval 16 au moyen de la vanne de contention aval 11. Ce volume de dosage 17 peut également, tant que la vanne 11 est fermée, être mis sous vide par la pompe 3, au travers des vannes 14 et 19, ou mis en contact avec l'atmosphère au travers de la vanne 15, ou alimenté à partir de l'alimentation en gaz 2 au travers des vannes 9, 12 et 13, tout ceci sans affecter la pression de la chambre aval 16.

Nous allons maintenant décrire l'utilisation du banc en vue d'obtenir une mesure de perméabilité. Les bouchons à tester sont placés dans les cellules de mesure 10 dont la géométrie est décrite plus loin.

Lorsqu'un bouchon est installé dans la cellule 10, la face amont du bouchon est soumise à la pression régnant dans la portion de canalisation comprise entre la cellule 10 et la vanne d'alimentation 12. La face aval du bouchon est soumise à la pression de gaz régnant dans la chambre aval 16. Afin de préconditionner les bouchons, on ferme la vanne d'alimentation 12, on ouvre les vannes 11, 13, 14, 19 et on fait le vide simultanément dans la chambre amont 76 et dans la chambre aval 16 à l'aide de la pompe à vide 3. On évacue ainsi les gaz et l'humidité piégés dans la matière du bouchon, et qui pourraient, si cette précaution n'était pas prise, venir augmenter la pression dans la chambre aval 16 lors des mesures de pression ultérieures. On ferme ensuite la vanne de contention aval 11 afin de maintenir le vide dans la chambre aval 16, on ferme la vanne de by-pass 13, on ouvre la vanne 12 et on applique une pression prédéfinie de gaz à partir de l'alimentation en gaz 2, par exemple 1200 millibars d'oxygène.

Pour ce faire, la vanne d'alimentation 12 peut être une vanne on/off, la pression en amont de la vanne 12 est régulée par l'unité de régulation de pression 87. Au moment nécessaire, on ouvre donc simplement la vanne d'alimentation 12 pour imposer la pression amont dans la chambre amont 76. Une vanne de perte de charge 44, du type par exemple vanne à aiguille, est alors avantageusement interposée entre la vanne 12 et la cellule de mesure 10, afin de créer une perte de charge et d'éviter une application trop brutale de la pression amont après avoir effectué le vide en amont et en aval du bouchon, ce qui pourrait par exemple causer un déplacement du bouchon contenu dans la cellule 10.

Selon une autre variante de réalisation, si la vanne 12 est une vanne pilotée de manière proportionnelle, l'ouverture de la vanne 12 peut être régulée par l'unité de contrôle électronique à l'aide de valeurs reçues du capteur de pression amont 7. L'installation peut alors ne pas comprendre de vanne 44.

Afin de faciliter la régulation de pression par l'unité de régulation 87, on choisit de préférence une pression de gaz appliquée en amont de la cellule 10, qui est supérieure à la pression atmosphérique. Les bouchons enfermés dans la cellule 10 se trouvent donc soumis à une pression de gaz amont sur leur face amont, et au vide créé dans la chambre aval 16 sur leur face aval. Les molécules de gaz qui traversent alors le bouchon font progressivement augmenter la pression dans la chambre aval 16. L'unité de commande électronique reliée au capteur de pression 20 provoque une acquisition de valeur de pression à des intervalles successifs permettant de construire une courbe de montée en pression de la chambre aval 16. On peut par exemple prévoir d'enregistrer une valeur de pression toutes les minutes, jusqu'à ce que la pression dans la chambre aval ait atteint une pression seuil de l'ordre de 150mbars. Au lieu d'un enregistrement à intervalles de temps prédéterminé, on peut également, à l'aide d'un détecteur d'événement, enregistrer des valeurs de pressions successives différant chacune de la valeur enregistrée précédente d'une valeur minimale. On évite ainsi de stocker des valeurs "sans intérêt" car alignées sur un plateau de pression. Si les premières mesures, permettent de déterminer les pentes recherchées (voir ci après) avant même que la pression ne dépasse 10mbars, on pourra préférer se limiter à ces premières valeurs. Dans la majorité des cas, une semaine suffit pour obtenir un nombre satisfaisant de mesures.

Les points de mesure obtenus sont ensuite comparés à une courbe théorique, pour en extraire des paramètres de la courbe expérimentale permettant de quantifier la perméabilité du bouchon.

Les points de la courbe peuvent également être utilisés pour déterminer un débit d'oxygène (par exemple en moles/jour) au travers du ou des bouchons. Afin d'évaluer le débit d'oxygène correspondant à un point particulier de la courbe expérimentale de pression, on peut évaluer la pente $\dfrac{dp}{dt}$ de la courbe au voisinage de ce point, et utiliser l'équation des gaz parfaits, soit pV=nRT

Où :

    p : la pression de gaz dans la chambre aval (en Pa),
    V : le volume réel de la chambre aval (en m$^3$),
    n : la quantité de gaz en moles dans la chambre aval,
    R : la constante universelle des gaz parfaits (soit 8, 314J.K$^{-1}$.mol$^{-1}$),
    T la température en Kelvin de la pièce et du banc de mesure, c'est-à-dire la température en C° à laquelle on a ajouté 273,15°, soit T = T°C +273,15.

En dérivant l'équation des gaz parfaits par rapport au temps, on obtient la relation :

$$\frac{dn}{dt} = \frac{dp}{dt} x \frac{Vx24x3600}{RxT}$$ , ou $\frac{dp}{dt}$ est la pente de la courbe de pression en Pa/s, et $\frac{dn}{dt}$ est le débit de gaz traversant le ou les bouchons, en mol/jour.

Si l'on souhaite par exemple exprimer un débit de gaz en $cm^3.jour^{-1}$ (par exemple pour l'oxygène, ce sera l'"OTR", en $cm^3$/jour), on sait qu'une mole de gaz occupe 22,4 litres soit 22 400 $cm^3$. Donc

$$OTR = \frac{dn}{dt} \text{ x } 22\ 400.$$

Si l'on souhaite par exemple exprimer un débit de gaz en $mg.jour^{-1}$ (par exemple pour l'oxygène, ce sera l'"OTR", en mg/jour), on sait qu'une mole de $O_2$ pèse 32000 mg. Donc

$$OTR = \frac{dn}{dt} \text{ x } 32000.$$

Dans ce type de calcul, la différence de pression, l'épaisseur et la surface d'échange ne sont pas prises en compte.

Afin de calculer le coefficient de perméabilité Pe du ou des bouchons, on effectue une transformation logarithmique de la courbe de pression en traçant une courbe y(t) avec

$$y(t) = -\ln\left[\frac{p_d(t) - p_u}{p_{d0} - p_u}\right] = -\ln\left[p_d(t) - p_u\right] + k \text{ , où :}$$

$p_d(t)$ : est la pression dans la chambre aval à l'instant t (en Pa),
$p_u$ : est la pression de gaz appliquée dans la chambre amont (en Pa),

$$k = \ln\left[p_{d0}(t) - p_u\right],$$

$p_{d0}$ : est par exemple la pression dans la chambre aval correspondant au premier point de mesure (en Pa).

On linéarise ensuite cette courbe y(t) suivant des techniques connues pour déterminer sa pente moyenne $\frac{dy}{dt}$ , et on en déduit le coefficient de perméabilité Pe du bouchon suivant la formule :

$$Pe = \frac{e.V_a.T_s}{A.p_s.T.V_m} x \frac{dy}{dt}$$

Où :

Pe : est le coefficient de perméabilité recherché (en $mol.m^{-1}.Pa^{-1}.s^{-1}$),
A : la section totale (en $m^2$) des bouchons traversés par le gaz,
e : l épaisseur (en m) du bouchon ou l'épaisseur moyenne des bouchons c'est-à-dire l'épaisseur de matière que doit traverser le gaz,
$p_s$ : une pression standard égale à 101 325 Pa,
t : (en s) l'abscisse des temps correspondant aux différents instants de mesure de pression ,
T : la température (en K) du banc de mesure,
$T_s$ : une température standard de 273 K,
$V_a$ : le volume réel de la chambre aval en $m^3$,
$V_m$ : le volume molaire du gaz avec lequel on fait la mesure, par exemple 0,0224 $m^3$/mole pour l'oxygène.

Il est à noter que le choix de la pression initiale $P_{do}$ n'influe pas sur le résultat car en changeant la valeur de P$_{do}$, on décale simplement la courbe y(t) d'une valeur fixe suivant l'axe des ordonnées sans modifier la pente de la courbe.

On peut également, en première approximation, considérer que quand la pression p$_d$ dans la chambre aval est très faible devant la pression p$_u$ appliquée dans la chambre amont, $y(t) \cong \dfrac{p_d}{p_u}$ , ce qui donne une valeur approximative pour le coefficient de perméabilité Pe sensiblement égale à $\dfrac{e.V_a.T_s}{A.p_s.T.V_m} x \dfrac{1}{p_u} x \dfrac{d(p_d)}{dt}$ . On peut donc, suivant une variante de mise en oeuvre, se contenter de déterminer directement la pente de la pression par rapport au temps, au lieu d'effectuer la transformation logarithmique.

Il est à noter que le coefficient de perméabilité Pe est intrinsèque au matériau mesuré, la géométrie de l'échantillon (surface, épaisseur) étant prise en compte dans la formule ci-dessus afin de ramener la valeur de Pe à une unité de surface et à une unité d'épaisseur. Le débit de gaz, par exemple l'OTR, est une valeur globale dépendant de la géométrie de l'échantillon.

L'unité de commande électronique peut être configurée de manière à effectuer automatiquement l'exploitation de l'ensemble des mesures de pression obtenues. On peut également envisager une exploitation semi-manuelle des mesures, où un opérateur sélectionne par exemple la portion de la courbe de mesure qui semble la plus favorable pour donner des valeurs pertinentes.

Une estimation précise du volume V$_a$ de la chambre aval est bien sûr nécessaire pour obtenir une estimation précise du coefficient de perméabilité Pe. Ce volume Va étant susceptible de varier suivant le positionnement de la face aval du bouchon ou des bouchons dans la cellule de mesure 10, un positionnement qui ne serait pas strictement reproductible des bouchons dans la cellule peut entraîner des écarts de mesure qui peuvent fausser par exemple des comparaisons entre deux matériaux de bouchon.

Afin d'éviter de tels artefacts, après chaque mise en place d'un bouchon et d'une série de bouchons dans la cellule de mesure 10, on procède à une évaluation du volume réel de la chambre aval 16. Pour ce faire, on procède comme suit. Le volume de la chambre de dosage 17 est invariable et est connu par une mesure préalable, par exemple effectuée en remplissant cette chambre de dosage d'eau, et en pesant cette eau pour déterminer son volume.

Après avoir mis en place le ou les bouchons dans la cellule de mesure 10, on ferme les vannes 13 et 15, on ouvre les vannes 11, 14 et 19, on actionne la pompe à vide 3 et on referme ensuite la vanne 14. On a ainsi fait le vide simultanément dans la chambre aval 16 et dans la chambre de dosage 17. On ferme ensuite la vanne de contention aval 11, on ouvre la vanne de mise à l'air 15, ce qui remplit la chambre de dosage 17 d'air à la pression atmosphérique. On referme la vanne 15 et on ouvre la vanne 11, ce qui permet de répartir l'air de la chambre de dosage 17 entre la chambre aval 16 et la chambre de dosage 17.

On referme ensuite la vanne 11. On ouvre les vannes 14 et 19 et on refait le vide dans la chambre de dosage 17.On referme ensuite la vanne 14. On vérifie si la pression dans la chambre aval 16 est dans la gamme mesurable par le capteur de pression 20. Si elle ne l'est pas on effectue un fractionnement du gaz compris dans la chambre aval 16 : on ouvre la vanne 11 pour répartir le gaz entre les deux chambres 16 et 17, on referme la vanne 11, on refait le vide dans la chambre de dosage 17, on referme la vanne 14, et on rouvre la vanne 11 afin de redistribuer le gaz restant dans la chambre aval 16.

Une fois que la pression dans la chambre aval 16 se trouve dans la gamme de mesure du capteur 20, on note la valeur p$_1$ de cette pression, on refait le vide dans la chambre de dosage 17, on referme la vanne 14, on rouvre la vanne 11 et on mesure la pression p$_2$ du gaz distribué entre les deux chambres 16 et 17. Comme gamme de mesure du capteur, on peut prendre un intervalle de pressions recommandé par le fournisseur du capteur, ou un intervalle de valeurs de pressions arbitraire dans lequel le capteur de pression 2 donne des valeurs reproductibles.

Si l'on note V$_a$ le volume réel de la chambre aval 16, et V$_{17}$ le volume de la chambre de dosage 17, l'équation des gaz parfaits permet d'écrire que :

$$p_1.V_a = p_2.\left(V_a + V_{17}\right)$$

soit

$$V_a = \frac{V_{17}.p_2}{p_1 - p_2} \ .$$

L'unité de commande électronique peut être configurée pour effectuer automatiquement, après la mise en place des cellules de mesure 10 munies des bouchons à caractériser, la détermination du volume réel $V_a$ de la chambre aval 16 de chaque unité de mesure 4, 5 ou 6.

Pour ce faire, l'unité de commande électronique peut être programmée pour effectuer les fractionnements du gaz contenu dans la chambre aval 16 jusqu'à ce que la valeur de la pression dans la chambre 16 se trouve dans une gamme considérée comme gamme de mesure fiable pour le capteur de pression 20. Selon une variante de mise en oeuvre, l'unité de commande électronique peut être programmée pour effectuer les fractionnements du gaz contenu dans la chambre aval 16 un nombre prédéterminé de fois.

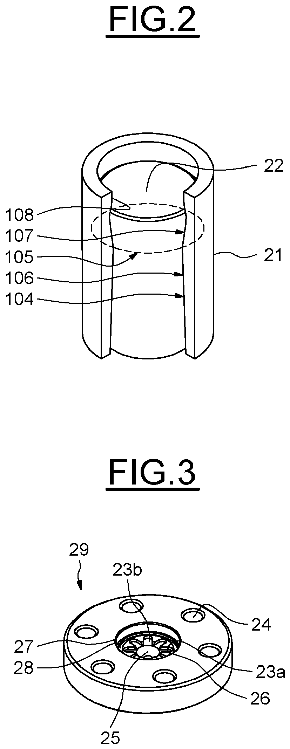

Les figures 2 à 6 illustrent quelques exemples de cellules et d'éléments de cellules de mesure permettant d'interposer entre la chambre amont et la chambre aval les bouchons que l'on souhaite tester.

Nous appelons par la suite direction axiale la direction de l'axe longitudinal du bouchon. La figure 2 illustre une bague de maintien 21 enserrant un bouchon 22 à tester. La bague 21 est montrée en coupe partielle. La bague 21 enserre le bouchon 22 de manière étanche sur toute la circonférence du bouchon. Le profil intérieur de la bague reproduit un profil type de col de bouteille afin de placer le bouchon dans des conditions de compression représentatives de son usage normal. Ce profil intérieur présente ainsi une surface d'appui intérieure 104 qui est une surface de révolution, et qui comporte une section 105 de plus petit diamètre. Le diamètre de cette section 105 est strictement inférieur à celui des autres sections radiales de la surface d'appui. La surface d'appui comporte au moins une première portion 106 de surface tronconique convergeant vers cette section minimale 105, ainsi qu'une seconde portion 107 de surface d'appui divergeant du côté opposé à partir de la section de plus petit diamètre. La seconde portion peut être autre que tronconique, et peut être suivie d'une surface convergente 108, dont la section minimale reste cependant supérieure à la section minimale 105. Afin de ne pas endommager le bouchon et afin d'assurer cependant un maintien axial efficace de celui-ci, la portion tronconique 106 est de longueur supérieure ou égale à 10mm, et de préférence supérieure ou égale à 20mm, et le tronc de cône présente une inclinaison par rapport à son axe comprise entre 0.7° et 3°.

La bague peut être réalisée dans des alliages métalliques simples à usiner, par exemple un alliage d'aluminium. On peut également envisager des bagues en matière synthétique, avec un revêtement intérieur permettant de garantir, entre la bague et le bouchon, un coefficient de friction qui reste comparable à celle du coefficient de friction du bouchon contre du verre. Afin que les contraintes internes au bouchon soient comparables aux contraintes internes d'un bouchon inséré dans un col en verre (pour que la perméabilité mesurée reflète celle du bouchon "en situation réelle"), il faut notamment que le coefficient de frottement entre le bouchon et l'intérieur de la bague soit comparable au coefficient de frottement entre le bouchon et un col en verre de même profil. On a constaté que la force nécessaire à la mise en place du bouchon était en particulier comparable dans les deux situations si la rugosité de la surface d'appui 104 parallèlement à l'axe de la bague 21 présente un Ra $\leq 0,7\mu m$ et un Rp $\leq 1,5\mu m$ et de préférence un Ra $\leq 0,5\mu m$ et un Rp $\leq 1,3\mu m$.

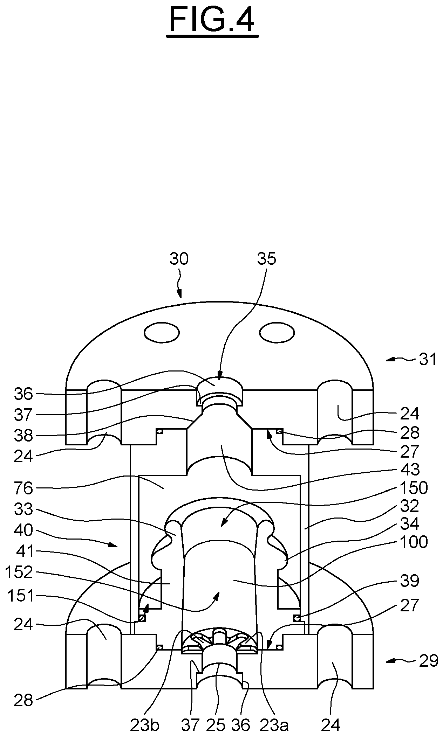

Pour constituer une cellule d'essai 10 de la figure 1, la bague 21 est enserrée entre une plaque de distribution 31 visible par exemple sur la figure 4 et une plaque de collecte 29 visible en perspective sur la figure 3 et dont une variante voisine est visible en coupe sur la figure 4. La plaque de distribution 31 et la plaque de collecte 29 présentent des formes globalement similaires. Elles sont munies chacune d'un creux de centrage 27 permettant de loger et maintenir radialement une des extrémités de la bague 21. Chaque creux de centrage comporte une zone d'évidement cylindrique permettant d'y insérer une extrémité axiale de la bague. La plaque de distribution 31 et la plaque de collecte 29 sont traversées par un ensemble de trous de serrage 24 permettant de passer des vis, des entretoises ou des tiges filetées reliant la plaque de distribution 21 la plaque de collecte 29 pour maintenir les extrémités de la bague 21 serrées axialement chacune à l'intérieur d'un creux de centrage 27.

Afin d'assurer l'étanchéité de la cellule 10 vis-à-vis des gaz traversant le bouchon 22, un joint torique 28 est prévu à l'intérieur de chaque creux de centrage 27 de la plaque de distribution 31 et de la plaque de collecte 29.

La plaque de collecte 29 est munie en son centre d'un orifice collecteur 25 permettant de récupérer les gaz ayant traversé le bouchon 22. Le bouchon 22 étant susceptible de venir en appui contre le fond du creux de centrage 27, une rosace collectrice 26 est prévue sur ce creux de centrage sous forme d'un relief en étoile délimitant à la fois des branches radiales 23a en relief servant de butée axiale à la face aval du bouchon 22, et délimitant des canaux de drainage 23b permettant de collecter le gaz ayant traversé le bouchon sur une surface supérieure à celle de l'orifice collecteur 25, notamment quand le bouchon 22 se trouve en butée contre le creux de centrage 27.

La figure 4 illustre une forme particulière de cellule de mesure 30, destinée à mesurer la perméabilité de bouchons à muselet, de type bouchon de champagne.

La cellule 30 comprend une plaque de collecte 29 identique à celle décrite à la figure 3. Elle comprend également une plaque de distribution 31 similaire à la plaque de collecte 29, mais différant de la plaque de collecte 29 au niveau du relief entourant un orifice central d'alimentation 35 par lequel le gaz est amené sur la partie amont du bouchon (non représenté). La rosace collectrice 26 entourant l'orifice collecteur est ainsi remplacée par un profil tronconique 38 moins coûteux à usiner.

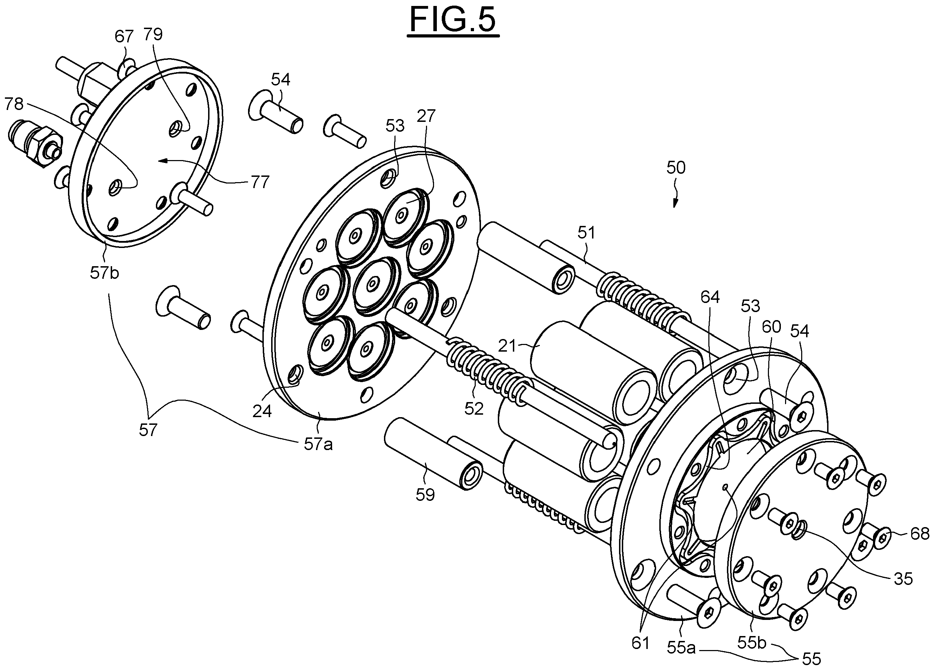

Le diamètre de l'orifice collecteur 25 est choisi de manière à minimiser le volume de la chambre aval 16, et en particulier le volume minimal de la chambre aval 16. Pour ce faire, le diamètre de l'orifice 25 est typiquement inférieur à la moitié du diamètre du creux de centrage, comme sur la figure 3, voire, comme illustré plus loin sur la figure 5, au tiers du diamètre du creux de centrage.

L'orifice collecteur 25 et l'orifice d'alimentation 35 peuvent chacun comporter une ou plusieurs zones de perçage droit 36 ainsi qu'un épaulement 37 permettant de limiter le déplacement axial d'une extrémité de conduite (non représentée) amenant le gaz vers la cellule ou d'une extrémité de conduite (non représentée) collectant le gaz présent dans la cellule en aval du bouchon (non représenté).

De même que sur la figure 3, la plaque de collecte 29 et la plaque de distribution 31 comportent chacune un creux de centrage 27. Les diamètres des creux de centrage des deux plaques sont comparables et peuvent être prévus pour loger indifféremment une bague simple 21 telle que décrite à la figure 2, ou une chambre 40 pour bouchon effervescent telle que représentée sur la figure 4. La chambre 40 pour bouchon effervescent de la figure 4 comprend une bague extérieure 32 formant une chambre globalement cylindrique, dont l'extrémité supérieure est configurée pour venir s'imbriquer de manière étanche dans le creux de centrage 27 de la plaque de distribution 31, et dont le diamètre intérieur maximal est élargi par rapport au diamètre du creux de centrage 27, de manière à pouvoir y insérer, par un orifice inférieur 151, un porte échantillon 33 et un bouchon à muselet (non représenté) débordant radialement de ce porte échantillon 33. La bague extérieure 32 présente en partie supérieure un orifice axial 43.

Le profil tronconique 38 de la plaque de distribution 31 permet d'assurer une transition entre le diamètre de l'orifice d'alimentation 35 et le diamètre de l'orifice supérieur 43 de la bague extérieure 32.

Le porte échantillon 33 comporte une portion de col factice 41 reproduisant le relief intérieur et extérieur d'un col de bouteille apte à recevoir un bouchon à muselet, c'est-à-dire d'un col de bouteille muni d'un épaulement 34 permettant de retenir le muselet du bouchon. Le porte échantillon 33 est traversé d'un conduit axial 100 reliant un orifice d'entrée 150 à un orifice de sortie 152 du porte échantillon.

Le porte échantillon 33 présente une base inférieure dont la géométrie est complémentaire de celle du creux de centrage 27 de la plaque de collecte 29, afin de pouvoir s'y emmancher de manière étanche. Le porte échantillon 33 est conçu de manière à pouvoir s'emboîter à l'intérieur de la bague extérieure 32 une fois que le col factice 41 a été équipé d'un bouchon à muselet, de manière à ce que la chambre 40, délimitée par la bague extérieure 32 et la bague intérieure 34, soit étanche aux gaz autres que ceux arrivant par l'orifice 43 de la bague extérieure 32 ou repartant par le centre du col factice 41.

Afin d'assurer cette étanchéité, des joints interbagues 39 peuvent être disposés autour de la base du porte échantillon 33. La cellule 30 ainsi définie permet de tester la perméabilité d'un bouchon muni de son muselet, en appliquant une pression de gaz sur la partie du bouchon extérieure au col factice 41, et en mesurant la pression des gaz parvenant à l'orifice collecteur 25. Les deux extrémités de la cellule ayant des diamètres extérieurs identiques, la cellule peut être montée en intervertissant les positions des deux extrémités par rapport à la plaque de distribution 31 et par rapport à la plaque de collecte 29, pour mesurer une perméabilité à partir de la base du bouchon, correspondant à la perméabilité d'échappement du $CO_2$ vers l'extérieur de la bouteille.

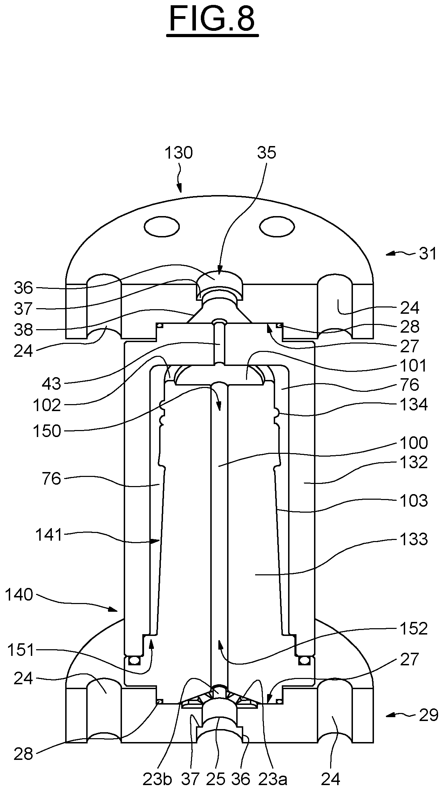

La figure 8 illustre une forme particulière de cellule de mesure 130, destinée à mesurer la perméabilité de capsules à vis, en particulier de capsules à vis métalliques. On retrouve sur la figure 8 des éléments communs à la figure 4, les mêmes éléments étant désignés par les mêmes références. Une enceinte 140 pour capsule à vis comprend une bague extérieure 132 en forme de cloche, définissant une chambre globalement cylindrique. L'extrémité supérieure de la bague 132 est configurée pour venir s'imbriquer de manière étanche dans le creux de centrage 27 de la plaque de distribution 31. Le diamètre intérieur maximal de la bague 132 est plus large que le diamètre du creux de centrage 27, de manière à pouvoir insérer dans la bague 132, par un orifice inférieur, un porte-échantillon 133 comportant une portion 141 en forme de col factice de bouteille. Le col factice 141 reproduit sur sa partie extérieure un filetage 134 d'une bouteille apte à être fermée par une capsule à vis (non représentée). Le filetage 134 du col factice est réalisé de manière à pouvoir y assembler une capsule à vis avec des moyens de production existants destinés à des bouteilles réelles. Un support (non représenté), par exemple en forme de bloc cylindrique, peut être prévu, reproduisant la forme de la partie inférieure d'une bouteille. L'ensemble constitué par le support avec le porte échantillon assemblé dessus, peut ainsi être compatible, du point de vue dimensionnel, avec les moyens de production précités. Une capsule à vis peut ainsi être sertie sur le porte échantillon 133 dans les mêmes conditions qu'elle serait sertie sur une bouteille réelle. La bague extérieure 132 présente en partie supérieure un orifice axial 43. Le porte échantillon 133 est percé d'un conduit axial 100 de diamètre inférieur au diamètre intérieur d'un col de bouteille en verre, afin de limiter le volume de la chambre aval dont le conduit axial 100 définit une portion. Un creux de collecte 101 est ménagé autour de l'extrémité supérieure -c'est à dire de l'extrémité opposée à la plaque de collecte- du conduit axial 100, afin que la capsule (non représentée) soit en appui sur une portion annulaire 102 du col factice, la surface de la portion annulaire étant de surface comparable à la surface d'appui de la capsule sur un col de bouteille en verre. On note que dans le mode de réalisation de la figure 4 comme dans le mode de réalisation de la figure 8, la bague intérieure 33 ou le porte échantillon 133, une fois insérés dans la bague extérieure 32, respectivement 132, présentent une portion de surface libre 103 sensiblement axiale, contenue à l'intérieur de la bague 33 ou de la cloche 133. C'est sur cette surface, à l'aide de l'épaulement 34 ou du filetage 134, que peut être sertie ou fixée une portion d'un bouchon ou d'une capsule extérieur(e) au col.

La figure 5 est une vue éclatée d'une cellule 50 multibagues permettant d'appliquer la pression amont de gaz simultanément sur plusieurs bouchons, afin d'obtenir une valeur moyenne de perméabilité sur plusieurs bouchons. On retrouve sur la figure 5 des éléments présents sur les figures 1 à 4, les mêmes éléments étant alors désignés par les mêmes références.

Un ensemble de huit bagues 21 est ici interposé entre une plaque de distribution 55 et une plaque de collecte 57. On note au passage que dans certaines variantes de réalisation, dont celle de la figure 5, la plaque de collecte peut présenter un ou des profils tronconiques presque plans convergeant vers l'orifice de collecte ou vers les orifices de collecte de gaz, au lieu de la rosace 26 sensiblement disposée à plat des figures 3 et 4. L'angle du cône est très ouvert de manière à limiter le volume minimal de la chambre aval 16. Dans une variante de réalisation, le fond du creux de centrage 27 peut être plan. Le maintien des bagues 21 entre les plaques 55 et 57 est assuré par des entretoises 59 interposées axialement entre les deux plaques, dans lesquelles entretoises viennent se visser des vis 54 de fermeture de la cellule 50. Chaque vis 54 traverse un orifice non fileté d'une des plaques 55 ou 57, et vient s'accrocher dans un filetage intérieur à une entretoise 59.

Les entretoises étant légèrement plus courtes que les bagues, il est ainsi possible d'assurer le serrage des bagues entre les deux plaques. Afin de faciliter l'écartement des deux plaques et la mise en place des bagues 21, des barres de guidage 51 munies de ressorts 52 d'écartement des plaques peuvent être soudées par une extrémité à l'une des plaques et coulisser à l'intérieur d'un orifice de guidage de l'autre plaque.

Les longueurs de ressorts 52 peuvent être prévues pour être du même ordre que les longueurs des bagues 21, ou pour être légèrement supérieures. La plaque de distribution 55 devant cette fois alimenter plusieurs bagues, elle est réalisée en deux parties, définissant entre elles un volume de distribution 60 rendu étanche par un joint 64. Le volume de distribution 60 relie un orifice d'alimentation central 35 auquel peut être assemblé une conduite amenant le gaz vers la cellule, et des orifices 61 alimentant le centre de chacune des bagues 21.

Le volume de distribution 60 est délimité entre une base de plaque de distribution 55a, et un couvercle de plaque de distribution 55b. La base de plaque de distribution 55a porte les creux 27 de centrage supérieurs de chacune des bagues 21, ainsi que les orifices 53 permettant de positionner les vis d'assemblage 54 de serrage des bagues. Le couvercle de plaque de distribution 55b est traversé par l'orifice central de distribution 35, et est assemblé à la base de plaque de distribution 55a par un groupe de vis 68.

De manière similaire, la plaque de collecte 57 comprend une base de plaque de collecte 57a et un couvercle de plaque de collecte 57b, relié par un ensemble de vis d'assemblage 67, et définissant entre eux un volume collecteur 77. Le volume collecteur 77 relie des orifices collecteurs 25 de chaque bague 21, percés dans la base de plaque de collecte 57a, et deux orifices de sortie 78 et 79, percés dans le couvercle de plaque de collecte 57b. Sur les orifices de sortie 78 et 79, peuvent être soudés respectivement, un premier connecteur permettant de brancher une canalisation allant vers la pompe à vide 3, et un second connecteur permettant de brancher un capteur de pression 20 (non représenté sur la figure 5) apte à mesurer la pression régnant à l'intérieur du volume collecteur 77. On peut envisager des variantes de réalisation où le couvercle de plaque de collecte ne comporte qu'un orifice de sortie, le capteur de pression 20 étant alors connecté en aval de cet orifice de sortie, sur la canalisation allant vers la pompe à vide 3.

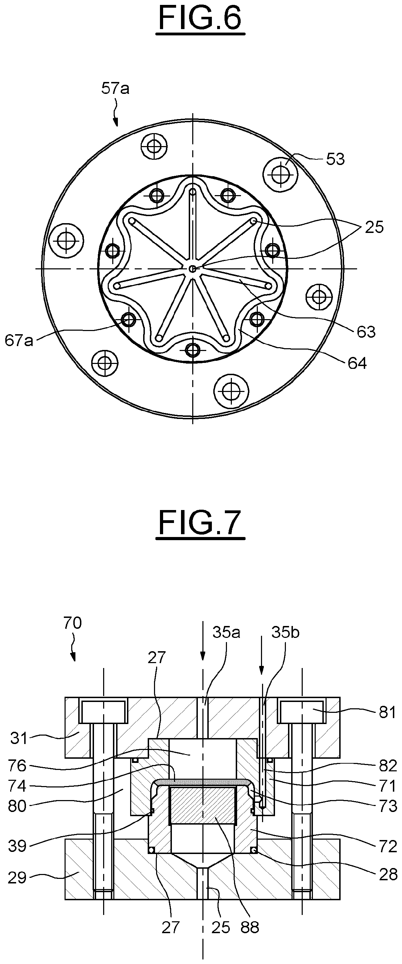

La figure 6 illustre la face de la plaque 57a qui est masquée sur la figure 5. On constate que la forme de la base de plaque de collecte 57a, vue du côté du volume collecteur 77, tel que sur la figure 6, est similaire à la partie supérieure de la base de plaque de distribution 55a que l'on peut voir sur la figure 5.

Les orifices 25 de collecte sont en particulier entourés par un joint 64, qui est sensiblement en forme d'étoile, afin de pouvoir contourner par l'extérieur de la plaque les orifices de collecte 25, et de pouvoir contourner par le centre de la plaque un groupe d'alésages filetés 67a permettant de serrer les vis d'assemblage 67.

Le volume collecteur 77 est cependant inférieur, en volume, au volume de distribution 61, puisque le volume collecteur 77 se limite à un groupe 63 de canaux en étoile reliant les huit orifices 25 de collecte et les deux orifices 78 et 79. Par comparaison, le volume de distribution 61 est plus important car il comprend une portion cylindrique centrale dont le diamètre est limité par le diamètre intérieur du joint 64.

Le volume de distribution 60 est ainsi moins coûteux à usiner. Le volume collecteur 77, un peu plus coûteux à réaliser, permet en revanche de limiter le volume total de la chambre aval 16 dont il fait partie, et d'améliorer la précision des mesures de pression dans cette chambre aval.

En effet, pour un volume de gaz donné traversant les bouchons, l'augmentation de pression engendrée dans la chambre aval 16 est plus perceptible si le volume de cette chambre est réduit.

La figure 7 illustre un autre modèle de cellule de mesure 70, destinée cette fois à mesurer la perméabilité de joints de type capsule. Comme dans le mode de réalisation précédent, la cellule 70 comprend une plaque de distribution 31 et une plaque de collecte 29, reliées ici axialement par des vis 81 permettant d'en régler l'espacement.

De manière similaire au mode de réalisation de la figure 4, une chambre 80 est définie par la plaque distributrice 31, la plaque de collecte 29, et deux bagues 71 et 72, dont une bague supérieure 71 insérée à l'intérieur d'un creux de centrage 27 de la plaque de distributrice munie d'un joint torique 28, et une bague inférieure 72 appuyée à l'intérieur d'un creux de centrage 27 de la plaque de collecte 29. La bague inférieure 72 reproduit la géométrie de l'extrémité d'un col de bouteille, destiné à recevoir des capsules de fermeture couvrant l'extrémité du col. Elle est configurée de manière à pouvoir être insérée à l'intérieur de la bague supérieure tout en assurant l'étanchéité entre les deux bagues à l'aide d'un joint interbagues 39.

Un intervalle 73 est ménagé entre la bague inférieure 72 et la bague supérieure 71, dans lequel il est possible de loger un joint de capsule 74, de manière à réserver un espace périphérique vide autour du joint 74. Le joint de capsule est alors maintenu sur sa périphérie par pincement entre les deux bagues 71 et 72. Un support poreux 88 est disposé à l'intérieur du col factice de la bague inférieure 72 de manière à ce qu'un joint de capsule 74 pincé entre les bagues 71 et 72, ne soit pas aspiré à l'intérieur du col lorsqu'on fait le vide en aval de ce joint 74. La pression de serrage des vis de la cellule est choisie de manière à ce que le joint soit pincé avec une pression de sertissage comparable à la pression de sertissage d'une capsule. Il est à noter qu'un insert poreux peut également être disposé à l'intérieur de la bague sous le bouchon dans le montage décrit en figures 2 ou 4, afin de réduire le volume effectif de la chambre aval.

La plaque de collecte 29 présente un orifice collecteur 25 disposé en dessous du support poreux 88. La plaque de distribution 31 est traversée par un orifice d'alimentation central 35a permettant d'amener du gaz sous pression au dessus de la partie centrale du joint 74, c'est-à-dire sur la surface couvrant le support poreux 88. La plaque de distribution 31 est également traversée par un orifice d'alimentation périphérique 35b, qui se poursuit par un canal latéral 82 traversant la bague supérieure 71 et rejoignant la périphérie de l'intervalle 73.

Du gaz sous pression injecté dans l'orifice d'alimentation périphérique 35b, est ainsi susceptible de traverser le joint 74 en direction de l'orifice collecteur 25, soit en diffusant à l'interface entre le joint 74 et la bague inférieure 72, soit en diffusant à l'intérieur de la matière du joint 74 à partir de la périphérie de ce joint.

Cette cellule 70 de mesure de joint capsule permet d'effectuer des mesures de perméabilité suivant le principe décrit plus haut si on applique la pression de gaz au niveau de l'orifice d'alimentation central 35a.

Cette cellule de mesure 70 permet également de faire des essais comparatifs de perméabilité de différents joints 74, ces essais prenant en compte des effets de diffusion d'interface et/ou de diffusion par le bord du joint. Le mécanisme de diffusion par le bord du joint peut en effet être différent de celui de la diffusion dans le sens de l'épaisseur du joint.

L'objet de l'invention ne se limite pas aux exemples de réalisation décrits, et peut se décliner en de nombreuses variantes. Le nombre d'unités de mesure 10 pour chaque banc de mesure 1 peut varier, de même que le nombre de bagues qui peuvent être montées sur une cellule de mesure 10 donnée. On peut prévoir de monter en parallèle plusieurs cellules pour bouchons à muselet, ou de monter en parallèle plusieurs cellules pour joints de capsules. Il est possible de brancher plusieurs unités de mesure sur une seule unité de régulation de pression, comme sur la figure 1, ou réguler la pression amont de chaque unité de mesure par une unité de régulation de pression dédiée.

On peut connecter l'unité de contrôle électronique à toutes les vannes décrites, qui sont alors des vannes pilotées, c'est-à-dire pilotées électroniquement, ou réserver certaines des vannes à un pilotage manuel, par exemple les vannes d'isolation 9 et 19, et/ou la vanne de by-pass 42. On peut également piloter manuellement toutes les vannes et n'avoir aucune vanne pilotée.

Les vannes 11, 12, 13, 14 peuvent être des vannes actionnables de manière proportionnelle, ou peuvent être, toutes, ou certaines d'entre elles, des vannes on/off. Dans le cas où la vanne d'alimentation 12 est une vanne on/off, la régulation de la pression amont est assurée uniquement par l'unité de régulation de pression 87. Une vanne de perte de charge 44, du type par exemple vanne à aiguille, est alors avantageusement interposée entre la vanne 12 et la cellule de mesure 10, afin de créer une perte de charge et d'éviter une application trop brutale de la pression amont après avoir effectué le vide en amont et en aval du bouchon, ce qui pourrait par exemple causer un déplacement du bouchon.

Dans l'exemple décrit, les cellules de mesure 10 sont alimentées en gaz par une plaque supérieure, et l'aspiration vers la pompe à vide 3 se fait à partir d'une plaque inférieure, mais il est bien entendu que l'alimentation en gaz pourrait se faire par la plaque inférieure et l'aspiration par la plaque supérieure.

Au niveau des connexions des conduites amenant, ou collectant, les gaz de la cellule 10, on peut par exemple prévoir, que la conduite de gaz arrivant à la cellule de mesure 10 soit vissée, ce qui est un mode d'assemblage peu onéreux, alors que le raccord permettant de relier la même cellule de mesure à la conduite formant l'aval de la chambre aval 16 soit au contraire soudé. De cette manière on limite les fuites du gaz arrivant en aval du bouchon, et on augmente la précision de la mesure. D'autres choix de méthodes d'assemblage des canalisations arrivant et partant de la cellule 10 sont cependant possibles. On peut choisir d'utiliser uniquement des raccords vissés ou uniquement des raccords soudés.

Afin que la quantité de gaz à détecter puisse engendrer une pression détectable par le capteur 20, on essaie de réduire dans la mesure du possible le volume de la chambre aval 16. Typiquement pour une cellule à un seul bouchon, le volume minimal compris entre l'aval du bouchon et la vanne 11 pourra ainsi être de l'ordre de quelques $cm^3$.

Dans le cas d'une cellule apte à accueillir plusieurs bouchons, le volume global de la chambre aval 16 sera plus important, mais on tente tout de même de conserver un volume qui, une fois divisé par le nombre de bouchons de la cellule, reste dans cette gamme de quelques $cm^3$ par bouchon.

En tout cas, comme on peut l'estimer sur les figures, la portion de chambre aval intégrée à la cellule de mesure, c'est-à-dire le volume total de circulation de gaz comprenant la zone d'accostage entre le porte échantillon et la plaque de collecte en aval du bouchon, et comprenant le circuit de gaz au travers de la plaque de collecte, est de volume inférieur ou égal au volume total maximal des bouchons que la cellule est apte à accueillir.

Afin que les opérations de fractionnement de gaz entre la chambre aval 16 et la chambre de dosage 17 donnent des rapports de pression exploitables, il est souhaitable que les volumes des deux chambres 16 et 17 restent du même ordre de grandeur, et en tout cas ne diffèrent pas de plus d'un ordre de grandeur.

On pourra par exemple utiliser des chambres de dosage ayant un volume de l'ordre de 2 à 6cm$^3$, par exemple entre 3 cm$^3$ et 4,5 cm$^3$. Opportunément, on choisira des rapports entre volume minimal de la chambre aval 16 et volume de la chambre de dosage 17, tels que le volume de la chambre de dosage 17 soit compris entre 1/10 du volume minimal de la chambre aval 16 et cinq fois le volume minimal de la chambre aval 16.

L'évaluation du volume réel de la chambre aval sera encore simplifiée si le volume de la chambre de dosage et le volume minimal de la chambre aval sont proches l'un de l'autre, par exemple si le volume de la chambre de dosage est compris entre ¼ et quatre fois le volume minimal de la chambre aval.

Certaines variantes de l'invention peuvent ne pas comporter de striction intérieure au niveau de la surface intérieure d'appui 104 de la bague 21 ou du porte échantillon 33 ou 133. Ces variantes concernent notamment des bagues dont la longueur du conduit intérieur est réduite, par exemple comprise entre 0,4 et 1 fois le diamètre minimal du conduit (non représentées), ou peuvent concerner des portes échantillons munis d'un bourrelet circonférentiel ou d'un filetage autour de leur orifice d'entrée, tels que les exemples des figures 4 et 8.

Le dispositif de mesure selon l'invention permet d'évaluer de manière fiable et reproductible la perméabilité d'échantillons de matière épaisse, tels que des bouchons de vin ou de champagne. La mesure peut être faite en un temps limité par rapport aux méthodes de mesure classiques mesurant la diffusion par coulométrie. La construction du dispositif de mesure selon l'invention ne nécessite que des éléments de canalisation et de vannes standard pour gaz sous pression, ainsi que des capteurs largement diffusés sur le marché tels que des capteurs de pression ou des capteurs de vide de type Pirani, basés sur une mesure de conductance thermique. Des capteurs un peu moins précis, par exemple de type capacitif, peuvent également être utilisés. On évite ainsi d'avoir recours à des dispositifs onéreux tels que des appareils de mesure coulométriques de diffusion d'oxygène.

**Revendications**

1. Cellule d'essais (30, 50) pour la mesure de la perméabilité aux gaz d'au moins un échantillon de matière ou d'un bouchon (22), comprenant :

   - une cloche de conditionnement (21, 32, 132) sensiblement cylindrique comportant une paroi circonférentielle étanche, un premier orifice d'entrée (43) et un premier orifice de sortie (151),
   - une plaque de distribution (31) étanche aux gaz, apte à être assemblée avec la cloche de conditionnement (21, 32, 132) de manière étanche, et comportant au moins un conduit d'alimentation (35) traversant la plaque (31) de manière à déboucher dans le premier orifice d'entrée (43),
   - un porte échantillon (21, 33, 133) monobloc traversé par un conduit (100) sensiblement cylindrique reliant un second orifice d'entrée (150) et un second orifice de sortie (152), le porte échantillon étant une pièce séparée (33, 133) apte à être assemblée avec la cloche (32, 132) de manière à former un volume étanche aux gaz reliant le premier orifice d'entrée (43) et le second orifice de sortie (152),
   - une plaque de collecte (29) étanche aux gaz, apte à être assemblée avec le porte échantillon (21, 33, 133) de manière étanche, et comportant au moins un conduit de collecte (25) traversant la plaque (29) de manière à déboucher dans le second orifice de sortie,

   **caractérisé en ce que** la plaque de distribution (31) comporte au moins un creux de centrage (27) dans lequel vient s'insérer axialement une première extrémité axiale de la cloche (32) de manière à ce que la plaque de distribution recouvre le premier orifice d'entrée (43), et ce que la plaque de collecte (29 comporte au moins un creux de centrage (27), dans lequel vient s'insérer axialement une extrémité axiale du porte échantillon (33) de manière à ce que la plaque de collecte (29) recouvre le second orifice de sortie (152), ces creux de centrage étant aptes respectivement à maintenir radialement la cloche (32) par rapport à la plaque de distribution (31) et à maintenir le porte échantillon (33) par rapport à la plaque de collecte (29), et **en ce que** l'extrémité du conduit de collecte (25) faisant face au second orifice de sortie (152) est de diamètre strictement inférieur au diamètre intérieur du creux de centrage de la plaque de collecte destiné à recevoir le porte échantillon, et le conduit de collecte (25) et l'extrémité du conduit cylindrique (100) du porte échantillon étant reliés par une portion de surface sensiblement plane ou conique de la plaque de collecte.

2. Cellule d'essais selon la revendication 1, dans laquelle le conduit (100) du porte échantillon (21, 33) présente une surface d'appui intérieure qui est une surface de révolution, comportant une section de plus petit diamètre (105), dont le diamètre est strictement inférieur à celui des autres sections de la surface d'appui, et comporte au moins une première portion de surface tronconique (106) convergeant vers cette section de plus petit diamètre (105), ainsi qu'une seconde portion de surface d'appui (107) divergeant du côté opposé à partir de la section de plus petit diamètre.

3. Cellule d'essais selon les revendications 1 ou 2, dans laquelle la portion tronconique (106) est de longueur supérieure ou égale à 10mm, et de préférence supérieure ou égale à 20mm, et présente une inclinaison par rapport à son axe comprise entre 0,7° et 3°.

4. Cellule d'essais selon l'une quelconque des revendications précédentes, dans laquelle le porte échantillon (21, 33) est une pièce métallique, la rugosité, parallèlement à l'axe du conduit (100) du porte échantillon, de la surface intérieure d'appui présentant un Ra≤0,7μm et un Rp ≤1,5μm, et de préférence présentant un Ra ≤0,5μm et un Rp ≤1,3μm.

5. Cellule selon l'une quelconque des revendications précédentes, comportant une cloche (32) et un porte échantillon (33) aptes à être reliés par une zone annulaire d'étanchéité (39) pour former le volume étanche aux gaz, de manière à ce qu'une portion du porte échantillon (41) entourant le second orifice d'entrée (150), dépasse à l'intérieur de la cloche (32) par une portion de surface libre (34) entourant une portion du conduit intérieur (100) du porte échantillon.

6. Cellule selon la revendication précédente, comportant au moins un bourrelet circonférentiel (34) ou un filetage (134) au niveau de la surface libre.

7. Cellule selon l'une quelconque des revendications précédentes, dans laquelle les creux de centrage (27) sont de même diamètre.

8. Cellule selon l'une quelconque des revendications précédentes, dans laquelle le conduit de collecte (25) débouche au centre du creux de centrage (27) de la plaque de collecte (29), et dans lequel l'extrémité du conduit de collecte (25) et l'extrémité du conduit cylindrique (100) sont reliées par une portion de surface sensiblement conique de la plaque de collecte.

9. Cellule selon l'une quelconque des revendications précédentes, dans laquelle le conduit de collecte (25) débouche au centre du creux de centrage (27) de la plaque de collecte (29), et dans lequel la plaque de collecte (29) est munie à sa surface de canaux (23b) ménagés à l'intérieur du creux de centrage (27), et convergeant radialement vers le conduit de collecte (25).

10. Cellule selon l'une quelconque des revendications 5 à 9, dans laquelle le porte échantillon (33, 133) présente un profil extérieur reproduisant la géométrie d'une extrémité de col de bouteille (41, 141) apte à recevoir un bouchon à plaque et muselet, une capsule à vis ou une capsule couronne, et dans laquelle la cloche (32, 132) est apte à contenir le porte échantillon muni du bouchon ou de la capsule.

11. Cellule (50) selon l'une quelconque des revendications précédentes, comportant plusieurs cloches (21, 32, 132) aptes à être assemblées simultanément entre une même plaque de distribution (55) et une même plaque de collecte (57).

12. Cellule (50) selon la revendication précédente, dans laquelle la plaque de distribution (55) comporte plusieurs conduits d'alimentation (61) disposés en étoile et reliant chacun des orifices d'entrée (43) de chaque cloche (21, 32, 132), et un même orifice d'alimentation (35) de la plaque, apte à être connecté à un conduit extérieur à la cellule (50).

13. Cellule (50) selon la revendication précédente, dans laquelle la plaque de collecte (57) comporte plusieurs conduits de collecte (63) disposés en étoile et reliant chacun des orifices de sortie (152) du porte échantillon (21, 33, 133) associé à chaque cloche (21, 32, 132), et un même orifice de collecte (78), apte à être connecté à un conduit extérieur à la cellule (50).

14. Cellule (50) selon la revendication précédente, dans laquelle le réseau de conduits (63) de la plaque de collecte comprend un second orifice de collecte (79) également apte à être connecté à un capteur ou à un conduit extérieur à la cellule (50).

**15.** Ensemble d'essai comprenant une cellule selon l'une des revendications 5 à 14, et comprenant un support de bouchage formant un tronc vertical apte à recevoir un porte échantillon (33, 133) de la cellule, sur un relief de diamètre similaire à un creux de centrage de la plaque de collecte ménagé en partie supérieure du tronc.

**Patentansprüche**

**1.** Prüfzelle (30, 50) zur Messung der Gasdurchlässigkeit wenigstens einer Materialprobe oder eines Korkens (22), welche umfasst:

- eine im Wesentlichen zylindrische Konditionierungsglocke (21, 32, 132), die eine dichte Umfangswand, eine erste Eintrittsöffnung (43) und eine erste Austrittsöffnung (151) aufweist,
- eine gasdichte Verteilungsplatte (31), die mit der Konditionierungsglocke (21, 32, 132) auf dichte Weise zusammenbaubar ist und wenigstens eine Zuführungsleitung (35) aufweist, welche die Platte (31) durchquert, um in die erste Eintrittsöffnung (43) zu münden,
- einen einstückigen Probenhalter (21, 33, 133), der von einer im Wesentlichen zylindrischen Leitung (100) durchquert wird, die eine zweite Eintrittsöffnung (150) und eine zweite Austrittsöffnung (152) verbindet, wobei der Probenhalter ein separates Teil (33, 133) ist, das mit der Glocke (32, 132) zusammenbaubar ist, so dass ein gasdichtes Volumen gebildet wird, das die erste Eintrittsöffnung (43) und die zweite Austrittsöffnung (152) verbindet,
- eine gasdichte Sammelplatte (29), die mit dem Probenhalter (21, 33, 133) auf dichte Weise zusammenbaubar ist und wenigstens eine Sammelleitung (25) aufweist, welche die Platte (29) durchquert, um in die zweite Austrittsöffnung zu münden,

**dadurch gekennzeichnet, dass** die Verteilungsplatte (31) wenigstens eine Zentriervertiefung (27) aufweist, in welche sich ein erstes axiales Ende der Glocke (32) axial einfügt, so dass die Verteilungsplatte die erste Eintrittsöffnung (43) bedeckt, und dadurch, dass die Sammelplatte (29) wenigstens eine Zentriervertiefung (27) aufweist, in welche sich ein axiales Ende des Probenhalters (33) axial einfügt, so dass die Sammelplatte (29) die zweite Austrittsöffnung (152) bedeckt, wobei diese Zentriervertiefungen in der Lage sind, die Glocke (32) radial bezüglich der Verteilungsplatte (31) zu halten bzw. den Probenhalter (33) bezüglich der Sammelplatte (29) zu halten, und dadurch, dass das Ende der Sammelleitung (25), das der zweiten Austrittsöffnung (152) zugewandt ist, einen Durchmesser aufweist, der streng kleiner als der Innendurchmesser der Zentriervertiefung der Sammelplatte ist, die dazu bestimmt ist, den Probenhalter aufzunehmen, und die Sammelleitung (25) und das Ende der zylindrischen Leitung (100) des Probenhalters durch einen im Wesentlichen ebenen oder konischen Oberflächenabschnitt der Sammelplatte verbunden sind.

**2.** Prüfzelle nach Anspruch 1, wobei die Leitung (100) des Probenhalters (21, 33) eine innere Anlagefläche aufweist, welche eine Rotationsfläche ist, die einen Querschnitt mit kleinstem Durchmesser (105) aufweist, dessen Durchmesser streng kleiner als derjenige der anderen Querschnitte der Anlagefläche ist, und die wenigstens einen ersten kegelstumpfförmigen Oberflächenabschnitt (106) aufweist, der sich zu diesem Querschnitt mit kleinstem Durchmesser (105) hin verjüngt, sowie einen zweiten Anlageflächenabschnitt (107), der sich auf der entgegengesetzten Seite von dem Querschnitt mit kleinstem Durchmesser aus erweitert.

**3.** Prüfzelle nach den Ansprüchen 1 oder 2, wobei der kegelstumpfförmige Abschnitt (106) von einer Länge ist, die größer oder gleich 10 mm und vorzugsweise größer oder gleich 20 mm ist, und eine Neigung bezüglich seiner Achse zwischen 0,7° und 3° aufweist.

**4.** Prüfzelle nach einem der vorhergehenden Ansprüche, wobei der Probenhalter (21, 33) ein Metallteil ist, wobei die Rauheit der inneren Anlagefläche parallel zur Achse der Leitung (100) des Probenhalters ein Ra ≤ 0,7 pm und ein Rp ≤ 1,5 pm aufweist und vorzugsweise ein Ra ≤ 0,5 pm und ein Rp ≤ 1,3 pm aufweist.

**5.** Zelle nach einem der vorhergehenden Ansprüche, welche eine Glocke (32) und einen Probenhalter (33) aufweist, die durch einen ringförmigen Dichtheitsbereich (39) verbindbar sind, um das gasdichte Volumen zu bilden, so dass ein Abschnitt des Probenhalters (41), der die zweite Eintrittsöffnung (150) umgibt, ins Innere der Glocke (32) mit einem freien Oberflächenabschnitt (34) hineinragt, der einen Abschnitt der inneren Leitung (100) des Probenhalters umgibt.

**6.** Zelle nach dem vorhergehenden Anspruch, welche wenigstens einen umlaufenden Wulst (34) oder ein Gewinde (134) an der freien Fläche aufweist.

7. Zelle nach einem der vorhergehenden Ansprüche, wobei die Zentriervertiefungen (27) denselben Durchmesser aufweisen.

8. Zelle nach einem der vorhergehenden Ansprüche, wobei die Sammelleitung (25) in der Mitte der Zentriervertiefung (27) der Sammelplatte (29) mündet und wobei das Ende der Sammelleitung (25) und das Ende der zylindrischen Leitung (100) durch einen im Wesentlichen konischen Oberflächenabschnitt der Sammelplatte verbunden sind.

9. Zelle nach einem der vorhergehenden Ansprüche, wobei die Sammelleitung (25) in der Mitte der Zentriervertiefung (27) der Sammelplatte (29) mündet und wobei die Sammelplatte (29) an ihrer Oberfläche mit Kanälen (23b) versehen ist, die im Inneren der Zentriervertiefung (27) ausgebildet sind und zur Sammelleitung (25) hin radial zusammenlaufen.

10. Zelle nach einem der Ansprüche 5 bis 9, wobei der Probenhalter (33, 133) ein Außenprofil aufweist, das die Geometrie eines Flaschenhalsendes (41, 141) nachbildet, das geeignet ist, einen Korken mit Plättchen und Drahtkorb, eine Schraubkappe oder einen Kronkorken aufzunehmen, und wobei die Glocke (32, 132) geeignet ist, den mit dem Korken oder der Kappe versehenen Probenhalter zu umschließen.

11. Zelle (50) nach einem der vorhergehenden Ansprüche, welche mehrere Glocken (21, 32, 132) aufweist, die gleichzeitig zwischen ein und derselben Verteilungsplatte (55) und ein und derselben Sammelplatte (57) montierbar sind.

12. Zelle (50) nach dem vorhergehenden Anspruch, wobei die Verteilungsplatte (55) mehrere Zuführungsleitungen (61) aufweist, die sternförmig angeordnet sind und jeweils Eintrittsöffnungen (43) einer jeweiligen Glocke (21, 32, 132) und dieselbe Zuführungsöffnung (35) der Platte, die an eine Leitung außerhalb der Zelle (50) anschließbar ist, verbinden.

13. Zelle (50) nach dem vorhergehenden Anspruch, wobei die Sammelplatte (57) mehrere Sammelleitungen (63) aufweist, die sternförmig angeordnet sind und jeweils Austrittsöffnungen (152) des Probenhalters (21, 33, 133), die einer jeweiligen Glocke (21, 32, 132) zugeordnet sind, und dieselbe Sammelöffnung (78), die an eine Leitung außerhalb der Zelle (50) anschließbar ist, verbinden.

14. Zelle (50) nach dem vorhergehenden Anspruch, wobei das Netz von Leitungen (63) der Sammelplatte eine zweite Sammelöffnung (79) umfasst, die ebenfalls an einen Sensor oder an eine Leitung außerhalb der Zelle (50) anschließbar ist.

15. Prüfanordnung, welche eine Zelle nach einem der Ansprüche 5 bis 14 umfasst und eine Verschließhalterung umfasst, die einen vertikalen Schaft bildet, der geeignet ist, einen Probenhalter (33, 133) der Zelle auf einem Relief mit einem Durchmesser, der einer Zentriervertiefung der Sammelplatte ähnlich ist, aufzunehmen, das im oberen Teil des Schaftes ausgebildet ist.

## Claims

1. Test cell (30, 50) for measuring the gas permeability of at least one sample of material or a stopper (22), comprising:

- a substantially cylindrical processing dome (21, 32, 132) comprising a sealed circumferential wall, a first inlet hole (43) and a first outlet hole (151),
- a distribution plate (31) which is gas-tight and which is capable of being assembled with the processing dome (21, 32, 132) in a sealed manner and which comprises at least one supply conduit (35) which extends through the plate (31) in order to open in the first inlet hole (43),
- a monobloc sample holder (21, 33, 133) through which there extends a substantially cylindrical conduit (100) which connects a second inlet hole (150) and a second outlet hole (152), the sample holder being a separate component (33, 133) which is capable of being assembled with the dome (32, 132) in order to form a gas-tight space which connects the first inlet hole (43) and the second outlet hole (152),
- a gas-tight collection plate (29) which is capable of being assembled with the sample holder (21, 33, 133) in a sealed manner, and comprising at least one collection conduit (25) which extends through the plate (9) in order to open in the second outlet hole,

**characterised in that** the distribution plate (31) comprises at least one centring recess (27) in which a first axial end of the dome (32) is inserted axially so that the distribution plate covers the first inlet hole (43), and **in that** the collection plate (29) comprises at least one centring recess (27) in which an axial end of the sample holder (33) is inserted axially so that the collection plate (29) covers the second outlet hole (152), these centring recesses being capable of radially retaining the dome (32) relative to the distribution plate (31) and retaining the sample holder (33) relative to the collection plate (29), respectively,

and **in that** the end of the collection conduit (25) facing the second outlet hole (152) has a diameter which is strictly less than the inner diameter of the centring recess of the collection plate which is intended to receive the sample holder, and the collection conduit (25) and the end of the cylindrical conduit (100) of the sample holder being connected by a substantially planar or conical surface portion of the collection plate.

2. Test cell according to claim 1, wherein the conduit (100) of the sample holder (21, 33) has an inner support surface which is a surface generated by revolution, comprising a cross-section having a smaller diameter (105) whose diameter is strictly less than that of the other cross-sections of the support surface, and comprises at least a first frustoconical surface portion (106) which converges towards this cross-section having a smaller diameter (105) and a second support surface portion (107) which diverges at the opposite side from the cross-section having the smaller diameter.

3. Test cell according to claim 1 or claim 2, wherein the frustoconical portion (106) has a length which is greater than or equal to 10 mm, and preferably greater than or equal to 20 mm, and has an inclination relative to the axis thereof between 0.7° and 3°.

4. Test cell according to any one of the preceding claims, wherein the sample holder (21, 33) is a metal component, the roughness, parallel with the axis of the conduit (100) of the sample holder, of the inner support surface having an Ra $\leq$ 0.7 $\mu$m and an Rp $\leq$ 1.5 $\mu$m, and preferably having an Ra $\leq$ 0.5 pm and an Rp $\leq$ 1.3 pm.

5. Cell according to any one of the preceding claims, comprising a dome (32) and a sample holder (33) which are capable of being connected by means of an annular sealing zone (39) in order to form the gas-tight space so that a portion of the sample holder (41) which surrounds the second inlet hole (150) extends inside the dome (32) via a free surface portion (34) which surrounds a portion of the inner conduit (100) of the sample holder.

6. Cell according to the preceding claim, comprising at least a circumferential bead (34) or a thread (134) in the region of the free surface.

7. Cell according to any one of the preceding claims, wherein the centring recesses (27) have the same diameter.

8. Cell according to any one of the preceding claims, wherein the collection conduit (25) opens in the centre of the centring recess (27) of the collection plate (29) and wherein the end of the collection conduit (25) and the end of the cylindrical conduit (100) are connected by means of a substantially conical surface portion of the collection plate.

9. Cell according to any one of the preceding claims, wherein the collection conduit (25) opens in the centre of the centring recess (27) of the collection plate (29) and wherein the collection plate (29) is provided at the surface thereof with channels (23b) which are arranged inside the centring recess (27) and which converge radially towards the collection conduit (25).

10. Cell according to any one of claims 5 to 9, wherein the sample holder (33, 133) has an outer profile which reproduces the geometry of a bottleneck end (41, 141) which is capable of receiving a stopper with a plate and wire cage, a screw cap or a crown cap, and in which the dome (32, 132) is capable of containing the sample holder provided with the stopper or the cap.

11. Cell (50) according to any one of the preceding claims, comprising a plurality of domes (21, 32, 132) which are capable of being assembled simultaneously between the same distribution plate (55) and the same collection plate (57).

12. Cell (50) according to the preceding claim, wherein the distribution plate (55) comprises a plurality of supply conduits (61) which are arranged in the form of a star and which each connect inlet holes (43) of each dome (21, 32, 132) and the same supply hole (35) of the plate, which hole is capable of being connected to a conduit outside the cell (50).

**13.** Cell (50) according to the preceding claim, wherein the collection plate (57) comprises a plurality of collection conduits (63) which are arranged in the form of a star and which each connect outlet holes (152) of the sample holder (21, 33, 133) associated with each dome (21, 32, 132) and the same collection hole (78) which is capable of being connected to a conduit outside the cell (50).

**14.** Cell (50) according to the preceding claim, wherein the conduit network (63) of the collection plate comprises a second collection hole (79) which is also capable of being connected to a sensor or a conduit outside the cell (50).

**15.** Test assembly comprising a cell according to any one of claims 5 to 14 and comprising a stopper support which forms a vertical stem which is capable of receiving a sample holder (33, 133) of the cell, on a relief having a diameter which is similar to a centring recess of the collection plate which is arranged in an upper portion of the stem.

FIG.1

# FIG.2

# FIG.3

# FIG.4

# FIG.5

# FIG.6

# FIG.7

# FIG.8